# FASCICULE DE BREVET EUROPEEN

(11) **EP 1 783 928 B1**
(45) Date de publication et mention de la délivrance du brevet: **21.01.2009**
(21) Numéro de dépôt: 05300895.9
(22) Date de dépôt: 07.11.2005
(51) Int. Cl.: H04B 7/02

(54) **Dispositif d'étalement et dispositif de désétalement pour les communications radio en présence d'une contrainte de densité spectrale de puissance hors d'axe**
Vorrichtungen zur Signal-Spreizung bzw. -Entspreizung zur Einhaltung einer zulässigen ausseraxialen Leistungsspektraldichte in der Funkkommunikation
Radiocommunications apparatus for signal spreading and despreading under the constraint of a limited off-axis power spectral density

(43) Date de publication de la demande: 09.05.2007
(73) Titulaire: Alcatel Lucent, 75008 Paris (FR)
(72) Inventeur: Mateus, Jean-Michel, 31000, TOULOUSE (FR); Aubert, Pascal, 31240, ST JEAN (FR); Corbel, Erwan, 31000 Toulouse (FR); Furlan, Stéphane, 31037, Toulouse cedex 01 (FR)
(74) Mandataire: Hedarchet, Stéphane

(56) Documents cités:
- WO-A-20/04075430
- US-A- 3 206 676
- MILLER M ET AL: "Two-way global broadcast system architecture" 2003 IEEE MILITARY COMMUNICATIONS CONFERENCE. MILCOM 2003. BOSTON, MA, OCT. 13 - 16, 2003, IEEE MILITARY COMMUNICATIONS CONFERENCE, NEW YORK, NY : IEEE, US, vol. VOL. 2 OF 2, 13 octobre 2003 (2003-10-13), pages 255-260, XP010698250 ISBN: 0-7803-8140-8
- PATENT ABSTRACTS OF JAPAN vol. 017, no. 337 (E-1388), 25 juin 1993 (1993-06-25) & JP 05 041685 A (IWATSU ELECTRIC CO LTD), 19 février 1993 (1993-02-19)

## Description

L'invention concerne les réseaux de communication, et plus précisément les communications par voie d'ondes entre des terminaux de communication.

On entend ici par « terminal de communication » tout équipement de communication radio, fixe ou mobile (ou portable), capable d'échanger par voie d'ondes des données sous la forme de signaux avec un autre équipement, éventuellement via un ou plusieurs satellites de communication. Il pourra donc s'agir, par exemple, d'une station terrestre de communication (éventuellement satellitaire), d'une passerelle satellitaire (ou « hub » ou encore « gateway »), ou d'un terminal d'émission/réception (individuel ou collectif) ou d'un ordinateur fixe ou portable, éventuellement de type satellitaire.

Certains terminaux de communication (éventuellement satellitaire), comme par exemple ceux, éventuellement à usage collectif, qui sont implantés dans des moyens de transport, tels que les véhicules automobiles (bus, cars, camions, voitures), les trains, les avions ou les bateaux, disposent d'antennes d'émission/réception dont les dimensions peuvent poser problème en présence de certaines contraintes d'utilisation.

Ainsi, pour permettre un fonctionnement dans la bande Ku (12 à 18 GHz), il a été proposé que les antennes d'émission/réception présentent une dimension selon leur grand axe comprise entre 60 et 70 cm. Or, dans le même temps les organismes internationaux de normalisation, tels que l'ETSI (European Telecommunication Standard Institut) et le FCC (Federal Communication Commission), imposent une limitation de la densité spectrale de puissance hors d'axe vers des satellites adjacents afin de limiter le niveau d'interférences qu'ils reçoivent. Cette limitation est définie par des conditions impliquant l'angle hors d'axe (θ) du lobe principale de l'antenne et le rapport (K) entre la densité de puissance agrégée de tous les terminaux transmettant au même moment sur la même bande de fréquence (pleine charge) et la densité de puissance d'un unique terminal de communication. Il est rappelé que dans le cas de transmissions de type MF-TDMA, K est égal à 1, contrairement au cas des transmissions de type CDMA où K est le nombre d'utilisateurs simultanés.

On peut montrer que dans certaines conditions, comme par exemple en présence de communications satellitaires de type DVB-RCS (pour « Digital Video Broadcasting - Return Channel by Satellite»), un terminal de communication équipé d'une antenne de 60 à 70 cm présente une densité spectrale de puissance hors d'axe plus grande que celle autorisée par les conditions définissant la limitation précitée. Il est alors nécessaire de réduire la densité spectrale de puissance utilisée d'un facteur qui peut être égal à 10.

Une solution classique pour réduire la densité spectrale de puissance consiste à utiliser une technique d'étalement direct en multipliant le signal utile par une séquence, par exemple de type pseudo-aléatoire, avec un rythme symbole (ou rythme puce (« chip »)) plus grand que le rythme symbole utile. Hélas, cette solution entraîne au moins trois inconvénients : elle nécessite une modification du terminal de communication afin qu'il soit capable d'effectuer la multiplication précitée, elle nécessite une modification du démodulateur, qui est par exemple implanté dans une passerelle de communication (éventuellement satellitaire), afin qu'il soit capable de décoder le nouveau rythme symbole, et elle nécessite en réception une synchronisation des codes en vue du desétalement du signal, qui requiert une précision temporelle de l'ordre de la fraction de symbole (ou puce).

Une autre solution consiste à utiliser des codes de type FEC avec une redondance en 1/N supérieure au code le plus bas (égal à ½) du standard DVB-RCS. Cette solution permet de réduire le rapport Es/N0 (énergie d'un symbole/densité spectrale de puissance de bruit) et par conséquent la densité spectrale de puissance. Hélas, cette solution entraîne également au moins trois inconvénients : elle nécessite une modification du terminal de communication afin qu'il soit capable d'utiliser un rythme symbole inférieur à celui du standard DVB-RCS, elle nécessite une modification du démodulateur, qui est par exemple implante dans une passerelle de communication (éventuellement satellitaire), afin qu'il soit capable de décoder les nouveaux rythmes de codage, et elle entraîne une probable limitation du rapport Es/N0 en raison du seuil de démodulation en réception, et par conséquent une modification des algorithmes du démodulateur afin d'améliorer ce seuil.

Par ailleurs, le document US3206676-A concerne un système de diversité temporel. Le document « Two-way global broadcast system architecture" 2003 IEEE Military Communications Conference de Miller M. et al, concerne une architecture de reutilisation de fréquence.

Aucune solution connue n'apportant une entière satisfaction, l'invention a donc pour but d'améliorer la situation.

Elle propose à cet effet un premier dispositif (ou dispositif d'étalement) dédié au traitement de signaux à transmettre par voie d'ondes, et comprenant :
- des moyens de mémorisation chargés de stocker temporairement une séquence d'échantillons numériques d'un signal analogique d'entrée selon une première fréquence d'échantillonnage et de façon synchronisée par rapport à des débuts de tranches temporelles périodiques, et
- des moyens de conversion numérique/analogique chargés de générer, pendant chaque tranche temporelle et selon une seconde fréquence d'échantillonnage égale à N fois la première fréquence d'échantilonnage, avec N entier strictement supérieur à 1, un signal analogique de sortie, à transmettre, représentatif de N répétitions de la séquence d'échantillons numériques stockée dans les moyens de mémorisation pendant la tranche temporelle concernée, afin de délivrer sur une sortie le signal analogique selon un rythme symbole égal à N fois un rythme symbole de référence.

Le premier dispositif (ou dispositif d'étalement) selon l'invention peut comporter d'autres caractéristiques qui peuvent être prises séparément ou en combinaison, et notamment:
- des moyens de contrôle d'horloge peuvent être chargés de transformer des signaux d'horloge de référence présentant la première fréquence en signaux d'horloge de travail présentant la seconde fréquence, et d'alimenter les moyens de conversion numérique/analogique avec ces signaux de travail afin qu'ils puissent travailler à la seconde fréquence : dans une première variante, et en présence d'un rapport entre la première fréquence et le rythme symbole de référence supérieur à N, les moyens de conversion numérique/analogique peuvent être chargés de diminuer d'un facteur N le nombre d'échantillons par symbole de la séquence d'échantillons numériques répétée N fois, tout en travaillant selon la première fréquence ;
- dans une seconde variante, il peut comprendre des moyens de contrôle d'horloge chargés de transformer des signaux d'horloge de référence présentant la première fréquence en signaux d'horloge de travail présentant une fréquence intermédiaire égale à J1 fois la première fréquence et inférieure à la seconde fréquence, et d'alimenter les moyens de conversion numérique/analogique avec les signaux de travail afin qu'ils puissent travailler à la fréquence intermédiaire. Dans ce cas, les moyens de conversion numérique/analogique sont chargés de diminuer d'un facteur K1 le nombre d'échantillons par symbole de la séquence d'échantillons numériques répétée N fois, avec J1*K1=N, tout en travaillant selon la fréquence intermédiaire ;
- des moyens de conversion analogique/numérique peuvent être chargés d'échantillonner un signal analogique d'entrée (à transmettre) en une séquence d'échantillons numériques, selon une première fréquence d'échantillonnage et de façon synchronisée par rapport à des débuts de tranches temporelles périodiques ;
   ➢ il peut également comprendre, d'une part, des premiers moyens de conversion de fréquence chargés de convertir la fréquence « primaire » que présente le signal analogique d'entrée en une fréquence « secondaire » (par exemple dite en bande de base (ou « baseband »), avant qu'il n'alimente les moyens de conversion analogique/numérique, et d'autre part, des seconds moyens de conversion de fréquence chargés de convertir la fréquence secondaire que présente le signal analogique de sortie en la fréquence primaire.

L'invention propose également un terminal de communication par voie d'ondes (ou radio) équipé d'un premier dispositif de traitement de signaux (ou dispositif d'étalement) du type de celui présenté ci-avant.

L'invention propose également un second dispositif (ou dispositif de desétalement) dédié au traitement de signaux analogiques issus d'un premier dispositif de traitement de signaux, et comprenant :
- des moyens de conversion analogique/numérique chargés d'échantillonner un signal analogique d'entrée, représentatif de N répétitions (ou copies) de séquences d'échantillons numériques, avec N entier strictement supérieur à 1, en N séquences identiques d'échantillons numériques selon une troisième fréquence d'échantillonnage, égale à N fois une quatrième fréquence d'échantillonnage, et de façon synchronisée par rapport à des débuts de tranches temporelles périodiques,
- des moyens de mémorisation chargés de stocker temporairement les N séquences identiques d'échantillons numériques délivrées par les moyens de conversion analogique/numérique pendant chaque tranche temporelle, et
- des moyens de combinaison chargés de combiner en phase pendant chaque tranche temporelle les N séquences identiques d'échantillons numériques stockées dans les moyens de mémorisation afin de délivrer une séquence d'échantillons numériques combinée selon un rythme symbole de référence.

Le second dispositif (ou dispositif de desétalement) selon l'invention peut comporter d'autres caractéristiques qui peuvent être prises séparément ou en combinaison, et notamment :
- ses moyens de combinaison peuvent comprendre des moyens d'estimation chargés d'estimer les déphasages relatifs entre les N séquences identiques d'échantillons numériques, des moyens de compensation chargés de compenser les déphasages estimés afin de délivrer N séquences identiques compensées, et des moyens de sommation chargés de sommer les N séquences identiques compensées afin de délivrer la séquence d'échantillons numériques combinée ;
- des moyens de contrôle d'horloge peuvent être chargés de transformer des signaux d'horloge de référence présentant la quatrième fréquence en signaux d'horloge de travail présentant la troisième fréquence, et d'alimenter les moyens de conversion analogique/numérique avec ces signaux de travail afin qu'ils puissent travailler à la quatrième fréquence ;
- dans une première variante, et en présence d'un rapport entre la quatrième fréquence et le rythme symbole de référence supérieur à N, les moyens de conversion analogique/numérique peuvent être chargés de diminuer d'un facteur N le nombre d'échantillons par symbole des N séquences identiques d'échantillons numériques, tout en travaillant selon la quatrième fréquence ;
- dans une seconde variante, il peut comprendre des moyens de contrôle d'horloge chargés de transformer des signaux d'horloge de référence présentant la quatrième fréquence en signaux d'horloge de travail présentant une fréquence intermédiaire égale à J2 fois la quatrième fréquence et inférieure à la troisième fréquence, et d'alimenter les moyens de conversion analogique/numérique avec ces signaux de travail afin qu'ils puissent travailler à la fréquence intermédiaire. Dans ce cas, les moyens de conversion analogique/numérique sont chargés de diminuer d'un facteur K2 le nombre d'échantillons par symbole des N séquences identiques d'échantillons numériques, avec J2*K2=N, tout en travaillant selon la fréquence intermédiaire ;
- des moyens de conversion numérique/analogique chargés de générer, pendant chaque tranche temporelle et selon la quatrième fréquence d'échantillonnage, un signal analogique de sortie représentatif de la séquence d'échantillons numériques combinée.
   ➢ d'une part, des premiers moyens de conversion de fréquence chargés de convertir la fréquence « primaire » que présente le signal analogique d'entrée en une fréquence « secondaire » (par exemple en bande de base (ou baseband)), avant qu'il n'alimente les moyens de conversion analogique/numérique, et d'autre part, des seconds moyens de conversion de fréquence chargés de convertir la fréquence secondaire que présente le signal analogique de sortie en la fréquence primaire ;
- des moyens de démultiplexage intercalés entre les moyens de conversion analogique/numérique et les moyens de mémorisation et chargés, en présence de signaux d'entrée présentant des porteuses différentes associées à des nombres N de répétitions (ou copies) de valeurs différentes, de démultiplexer les répétitions de séquences en fonction des porteuses associées. Dans ce cas, les moyens de mémorisation peuvent être constitués de modules de mémorisation associés chacun à l'une des porteuses et chargés de stocker les répétitions de séquences démultiplexées qui leur correspondent respectivement, et les moyens de combinaison peuvent être constitués de modules de combinaison associés chacun à l'une des porteuses et chargés chacun de combiner en phase pendant chaque tranche temporelle les répétitions de séquences identiques d'échantillons numériques stockées dans le module de mémorisation correspondant, afin de délivrer une séquence d'échantillons numériques combinée selon le rythme symbole de référence. On prévoit alors en complément des moyens de multiplexage placés en aval des modules de combinaison et chargés de multiplexer les séquences d'échantillons numériques combinées (délivrées par les modules de combinaison) afin de délivrer des multiplex de séquences.

L'invention propose également un démodulateur de signaux transmis par voie d'ondes (éventuellement de type multiporteuse), équipé d'un second dispositif de traitement de signaux (ou dispositif de desétalement) du type de celui présenté ci-avant.

L'invention est particulièrement bien adaptée, bien que de façon non exclusive, aux communications satellitaires, en particulier de type DVB-RCS (pour « Digital Video Broadcasting - Return Channel by Satellite»).

D'autres caractéristiques et avantages de l'invention apparaîtront à l'examen de la description détaillée ci-après, et des dessins annexés, sur lesquels :
- la figure 1 illustre de façon très schématique et fonctionnelle un terminal de communication radio équipé d'un premier exemple de réalisation d'un premier dispositif de traitement de signaux (ou dispositif d'étalement) selon l'invention,
- la figure 2A illustre schématiquement pour un spectre multiporteuse, d'une part (partie supérieure), la densité spectrale de puissance, avant étalement selon l'invention, en fonction de la fréquence, et d'autre part (partie inférieure), des paquets (ou « bursts ») successifs, représentatifs des signaux analogiques à transmettre avant étalement selon l'invention, à l'intérieur de fenêtres temporelles (ou « timeslots ») successives,
- la figure 2B illustre schématiquement pour un spectre multiporteuse, d'une part (partie supérieure), la densité spectrale de puissance en fonction de la fréquence, après étalement selon l'invention, et d'autre part (partie inférieure), des paquets (ou « bursts ») successifs après étalement selon l'invention, représentatifs des signaux analogiques à transmettre, à l'intérieur de fenêtres temporelles (ou « timeslots ») successives,
- la figure 3 illustre de façon très schématique et fonctionnelle un deuxième exemple de réalisation d'un premier dispositif de traitement de signaux (ou dispositif d'étalement) selon l'invention,
- la figure 4 illustre de façon très schématique et fonctionnelle un terminal de communication radio équipé d'un modulateur comprenant le premier exemple de réalisation de premier dispositif de traitement de signaux (ou dispositif d'étalement) selon l'invention,
- la figure 5 illustre de façon très schématique et fonctionnelle un terminal de communication radio équipé d'un modulateur comprenant un troisième exemple de réalisation d'un premier dispositif de traitement de signaux (ou dispositif d'étalement) selon l'invention,
- la figure 6 illustre de façon très schématique et fonctionnelle un terminal de communication radio équipé d'un modulateur couplé à un quatrième exemple de réalisation d'un premier dispositif de traitement de signaux (ou dispositif d'étalement) selon l'invention, de type externe,
- la figure 7 illustre de façon très schématique et fonctionnelle un récepteur radio équipé d'un premier exemple de réalisation d'un second dispositif de traitement de signaux (ou dispositif de desétalement) selon l'invention,
- la figure 8 illustre de façon très schématique et fonctionnelle un deuxième exemple de réalisation d'un second dispositif de traitement de signaux (ou dispositif de desétalement) selon l'invention,
- la figure 9A illustre schématiquement pour un spectre multiporteuse, d'une part (partie supérieure), la densité spectrale de puissance reçue en fonction de la fréquence, avant desétalement selon l'invention, et d'autre part (partie inférieure), des paquets (ou « bursts ») successifs, représentatifs des signaux analogiques reçus, avant desétalement selon l'invention, à l'intérieur de fenêtres temporelles (ou « timeslots ») successives,
- la figure 9B illustre schématiquement pour un spectre multiporteuse, d'une part (partie supérieure), la densité spectrale de puissance reçue en fonction de la fréquence, après desétalement selon l'invention, et d'autre part (partie inférieure), des paquets (ou « bursts ») successifs après desétalement selon l'invention, représentatifs des signaux analogiques transmis, à l'intérieur de fenêtres temporelles (ou « timeslots ») successives,
- la figure 10 illustre de façon très schématique et fonctionnelle un récepteur radio équipé d'un troisième exemple de réalisation d'un second dispositif de traitement de signaux (ou dispositif de desétalement) selon l'invention,
- la figure 11 illustre de façon très schématique et fonctionnelle un récepteur radio équipé d'un démodulateur couplé à un quatrième exemple de réalisation d'un second dispositif de traitement de signaux (ou dispositif de desétalement) selon l'invention, de type externe, et
- la figure 12 illustre de façon très schématique et fonctionnelle un récepteur radio équipé d'un cinquième exemple de réalisation d'un second dispositif de traitement de signaux (ou dispositif de desétalement) selon l'invention.

Les dessins annexés pourront non seulement servir à compléter l'invention, mais aussi contribuer à sa définition, le cas échéant.

L'invention a pour objet de permettre la transmission de signaux analogiques (représentatifs de paquets de données) par des terminaux de communication, en présence de contraintes relatives à la dimension de leurs antennes d'émission/réception et à la limitation de la densité spectrale de puissance hors d'axe.

Dans ce qui suit, on considère à titre d'exemple non limitatif que les communications se font sur la voie dite « retour », c'est-à-dire entre des terminaux de communication (radio) et une passerelle satellitaire, via au moins un satellite de communication d'un réseau satellitaire et selon le standard DVB-RCS (de type MF-TDMA). Il est rappelé que dans le cas du standard DVB, les flux (de paquets de données) qui empruntent la voie retour sont modulés selon le standard DVB-RCS, tandis que les flux qui empruntent la voie dite « aller » (c'est-à-dire entre la passerelle satellitaire et les terminaux, via les satellites de communication) sont modulés selon le standard DVB-S2 (de type TDM). En d'autres termes, un terminal de communication émet en DVB-RCS et reçoit en DVB-S2, tandis qu'une passerelle satellitaire émet en DVB-S2 et reçoit en DVB-RCS.

Bien entendu, l'invention n'est pas limitée aux communications répondant au standard DVB-RCS. Elle concerne toutes les situations dans lesquelles un terminal de communication doit transmettre par voie d'ondes à un autre équipement de communication des paquets de données en présence de contraintes relatives à la dimension de son antenne d'émission/réception et à la limitation de la densité spectrale de puissance hors d'axe.

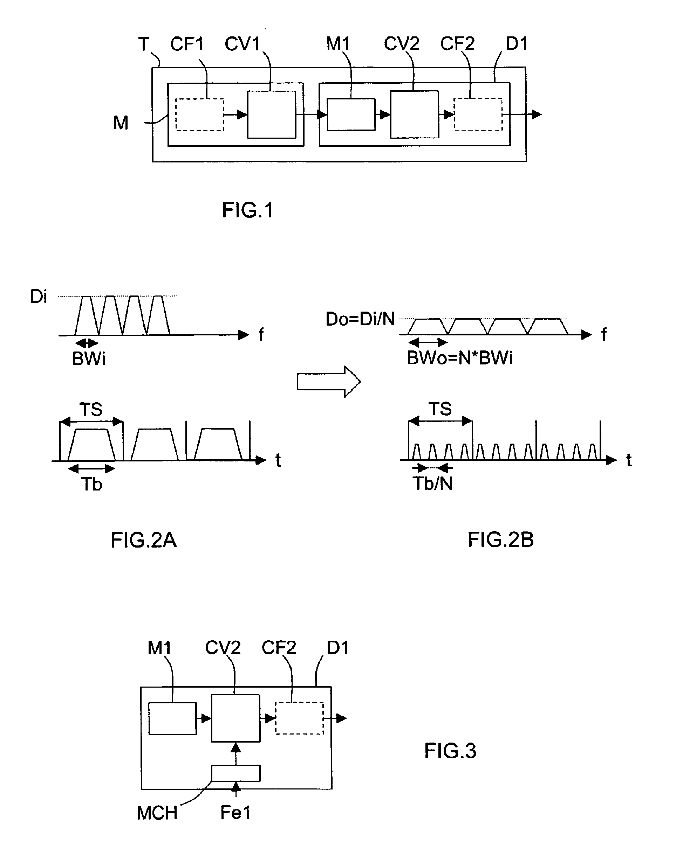

On se réfère tout d'abord à la figure 1 pour décrire un premier exemple de réalisation d'un premier dispositif de traitement de signaux à transmettre (ou dispositif d'étalement) D1, selon l'invention.

Selon l'invention, un premier dispositif D1 comprend au moins un module de mémorisation M1 et un module de conversion numérique/analogique CV2.

Le module de mémorisation M1 est chargé de stocker temporairement au début de chaque tranche temporelle une séquence d'échantillons numériques d'un signal analogique, ci-après dit d'entrée, selon une première fréquence d'échantillonnage Fe1 et de façon synchronisée par rapport à des débuts de tranches temporelles périodiques.

Chaque séquence d'échantillons numériques est par exemple fournie par le module de conversion analogique/numérique CV1 d'un modulateur MR (ici de type DVB-RCS) d'un terminal de communication T.

Le terminal de communication T est un terminal d'émission/réception, par exemple de type satellitaire, collectif, et implanté dans un train. Mais, il pourrait s'agir de tout équipement de communication radio, fixe ou mobile (ou portable), capable d'échanger par voie d'ondes des données sous la forme de signaux avec un autre équipement, éventuellement via un ou plusieurs satellites de communication, comme par exemple une station terrestre de communication (éventuellement satellitaire), une passerelle satellitaire (ou hub ou encore gateway), ou un ordinateur fixe ou portable, éventuellement de type satellitaire.

Dans l'exemple illustré sur la figure 1, le premier dispositif D1 est implanté dans un terminal de communication T, et plus précisément en sortie du module de conversion analogique/numérique CV1 de son modulateur MR. Mais, comme on le verra plus loin, il pourrait soit être implanté dans le modulateur MR, soit être externe au terminal T tout en étant couplé à la sortie du module de conversion analogique/numérique CV1 de son modulateur MR.

Le modulateur MR dispose de signaux d'horloge cadencés à la première fréquence Fe1. Son module de conversion analogique/numérique CV1 échantillonne chaque signal analogique d'entrée en une séquence d'échantillons numériques. Cet échantillonnage se fait selon la première fréquence d'échantillonnage Fe1 et de façon synchronisée par rapport au début de chaque tranche temporelle périodique (ou timeslot). Par conséquent, le module de conversion analogique/numérique CV1 délivre une séquence d'échantillons numériques, représentative d'un paquet (ou burst) reçu, lors de chaque tranche temporelle et selon un rythme symbole de référence RS tel que Fe1/RS >1.

Les signaux analogiques d'entrée représentent des paquets de données et peuvent être schématisés comme illustré dans la partie inférieure de la figure 2A. Comme illustré, chaque signal représentatif d'un paquet se présente sous la forme d'un paquet de durée Tb situé dans une tranche temporelle (ou « timeslot ») de durée TS (t représente le temps).

La densité spectrale de puissance Di en sortie du modulateur MR est illustrée dans la partie supérieure de la figure 2A en fonction de la fréquence f, dans le cas d'un spectre multiporteuse. Il est important de noter que les spectres ne sont pas nécessairement périodiques. On peut en effet avoir des porteuses avec des débits différents. Cette densité spectrale de puissance Di se présente sous la forme d'un signal occupant une bande passante BWi, définie par la relation BWi = (1+α)*RS, où α est le paramètre appelé « roll-off » (variation de gain).

Afin que le module de mémorisation M1 puisse mémoriser chaque séquence délivrée par le module de conversion analogique/numérique CV1, sa taille doit être au moins égale à Fe1*TS et la fréquence d'écriture des symboles d'une séquence dans le module de mémorisation M1 doit être égale à Fe1. Le module de mémorisation M1 se présente par exemple sous la forme d'une mémoire tampon (ou « buffer »).

Le module de conversion numérique/analogique CV2 est chargé de générer lors de chaque tranche temporelle un signal analogique de sortie (à transmettre), représentatif de N répétitions (ou copies) de la séquence d'échantillons numériques qui est stockée dans le module de mémorisation M1 pendant la tranche temporelle concernée. N est un entier strictement supérieur à 1 (N>1), appelé ci-après facteur d'étalement. Cette génération se fait selon une seconde fréquence d'échantillonnage Fe2 égale à N fois la première fréquence d'échantillonnage (Fe2=N*Fe1). Le module de conversion numérique/analogique CV2 délivre donc sur sa sortie, pendant chaque tranche temporelle, un signal analogique selon un rythme symbole (ou rythme puce) RC égal à N fois le rythme symbole de référence RS (RC = N*RS).

En d'autres termes, et comme illustré dans la partie inférieure de la figure 2B, le module de conversion numérique/analogique CV2 délivre sur sa sortie, lors de chaque tranche temporelle (ou timeslot), N copies (ou répétitions) analogiques des symboles numériques de la séquence qui est stockée dans le module de mémorisation M1 pendant ladite tranche temporelle. Dans cet exemple N est égale à quatre (4). Mais, comme indiqué ci-avant, le facteur d'étalement N peut prendre n'importe quelle valeur entière strictement supérieure à un (1).

Pour ce faire, le module de conversion numérique/analogique CV2 peut par exemple lire N fois le contenu du module de mémorisation M1 et procéder N fois à la conversion numérique/analogique de la séquence d'échantillons numériques lue, lors de chaque tranche temporelle. Dans ce cas, la fréquence de lecture Fr est égale à N fois la première fréquence d'échantillonnage Fe1 (Fr=N*Fe1).

La densité spectrale de puissance Do en sortie du module de conversion numérique/analogique CV2 est illustrée dans la partie supérieure de la figure 2B en fonction de la fréquence f. Du fait de l'étalement par le facteur d'étalement N, elle est égale à Di/N (Do=Di/N). Elle se présente sous la forme d'un signal occupant une bande passante BWo, définie par la relation BWo = N*BWi = N*(1+α)*RS.

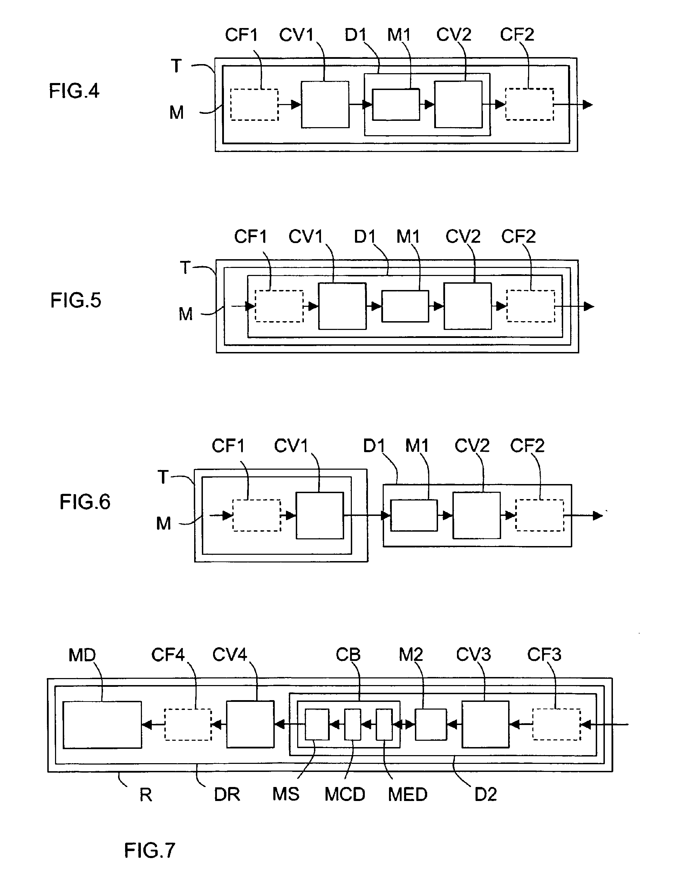

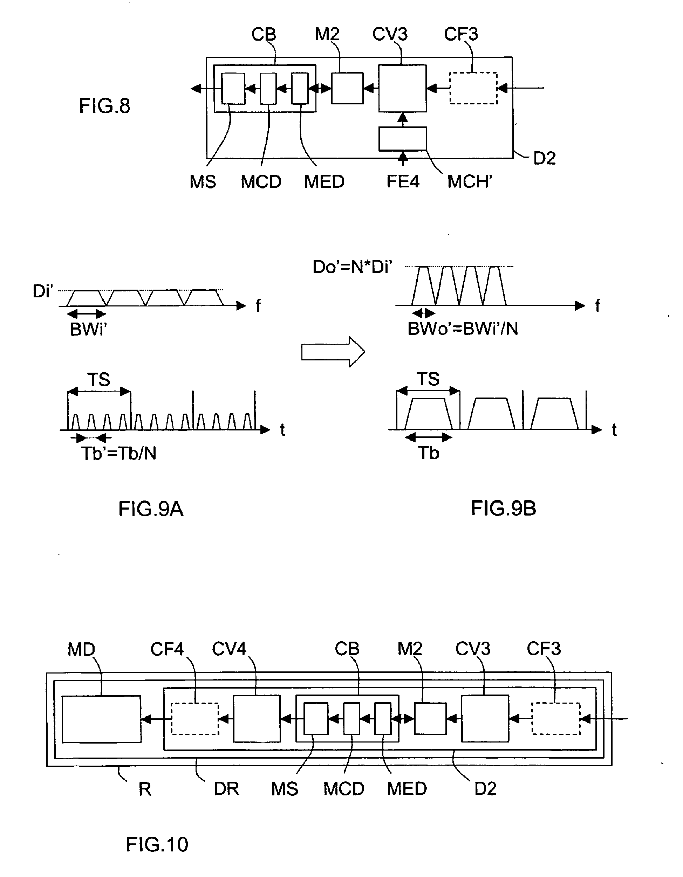

L'invention consiste donc à augmenter « artificiellement » d'un facteur N choisi le rythme symbole de référence RS d'un burst (ou paquet) initialement contenu dans une tranche temporelle, induisant dans le même temps une augmentation d'un facteur N de la bande passante occupée. La puissance de chaque burst (ou paquet) devant rester la même afin de réduire la densité spectrale de puissance, le rapport Es/N0 se trouve alors réduit du facteur N. Afin que le rapport Es/N0 retrouve sa valeur nominale, l'invention consiste donc également à répéter N fois chaque burst (ou paquet) lors de chaque tranche temporelle. Il ne reste plus alors en réception qu'à (re)combiner les N copies (ou répétitions) reçues dans chaque tranche temporelle pour récupérer le burst (ou paquet) initial correspondant, comme on le verra plus loin en référence aux figures 7, 9A et 9B.

Plusieurs solutions peuvent être envisagées pour que le premier dispositif D1 puisse augmenter artificiellement du facteur N le rythme symbole de référence RS.

Une première solution consiste à « décimer » les signaux numériques du facteur N. Pour ce faire, le module de conversion numérique/analogique CV2 du premier dispositif D1 peut, si le rapport Fe1/RS est supérieur à N (suréchantillonnage), diminuer d'un facteur N le nombre d'échantillons par symbole de la séquence d'échantillons numériques répétée N fois (c'est ce que l'on appelle « décimer »), en travaillant avec la première fréquence Fe1 (fournie par l'horloge de référence).

Une seconde solution consiste à augmenter la première fréquence Fe1 de l'horloge du convertisseur numérique/analogique CV2. A cet effet, et comme cela est illustré sur la figure 3, le premier dispositif D1 peut comprendre un module de contrôle d'horloge MCH chargé de transformer les signaux d'horloge de référence présentant la première fréquence Fe1 du modulateur MR en signaux d'horloge de travail présentant la seconde fréquence Fe2 égale à N fois la première fréquence Fe1 (Fe2=N*Fe1). Ce module de contrôle d'horloge MCH alimente alors le module de conversion numérique/analogique CV2 avec les signaux d'horloge de travail afin qu'il puisse travailler directement à la seconde fréquence Fe2.

Une troisième solution consiste à combiner les deux solutions précédentes en augmentant la fréquence d'horloge utilisée par le module de conversion numérique/analogique CV2 (Fe1 → Fe'1) par un facteur j1, au moyen du module de contrôle d'horloge MCH, et en décimant le signal numérique d'un facteur k1, avec j1*k1=N, dans le module de conversion numérique/analogique CV2, de sorte que la vitesse (ou fréquence) de modulation RC apparente soit égale à N*RS. Cela impose que l'on ait Fe'1=k1*Fe1 et Fe'1<RC. Avec ces définitions et conditions, la première solution correspond au cas où l'on a j1=1 (Fe'1=Fe1) et k1=N, tandis que la seconde solution correspond au cas où l'on a j1=N (Fe'1=N*Fe1=Fe2) et k1=1.

Comme cela est illustré sur la figure 1, le premier dispositif (ou dispositif d'étalement) D1 peut également comprendre un (second) module de conversion de fréquence CF2 placé en aval de son module de conversion numérique/analogique CV2. Un tel (second) module de conversion de fréquence CF2 doit être prévu lorsque le module de conversion analogique/numérique CV1 reçoit des signaux analogiques d'entrée qui sont issus d'une conversion d'une fréquence « primaire » Fl dans une fréquence « secondaire » au moyen d'un (premier) module de conversion de fréquence CF1 du modulateur MR (placé en amont du module de conversion analogique/numérique CV1). Cette fréquence secondaire est par exemple la fréquence dite en bande de base (ou « baseband »).

Le second module de conversion de fréquence CF2 est alors chargé de convertir en fréquence primaire FI la fréquence secondaire que présente chaque signal analogique de sortie délivré par le module de conversion numérique/analogique CV2, avant qu'il ne soit transmis.

Dans ce qui précède on a décrit un exemple de réalisation d'un premier dispositif D1 faisant partie d'un terminal T et couplé à la sortie du module de conversion analogique/numérique CV1 du modulateur MR. Mais, plusieurs variantes de réalisation peuvent être envisagées.

Ainsi, et comme illustré sur la figure 4, le premier dispositif D1 peut faire partie du modulateur MR. Il comprend ici la mémoire M1, couplée à la sortie du module de conversion analogique/numérique CV1, et le module de conversion numérique/analogique CV2. Il peut également et éventuellement comprendre un second module de conversion de fréquence CF2.

Comme cela est illustré sur la figure 5, le premier dispositif D1 peut également faire partie du modulateur MR, mais comporter le module de conversion analogique/numérique CV1, la mémoire M1 et le module de conversion numérique/analogique CV2, ainsi qu'éventuellement les premier CF1 et second CF2 modules de conversion de fréquence.

Comme cela est illustré sur la figure 6, le premier dispositif D1 peut être externe au modulateur MR (qui comporte le module de conversion analogique/numérique CV1 ainsi qu'éventuellement un premier module de conversion de fréquence CF1). Il comporte alors la mémoire M1, couplée à la sortie du modulateur MR, et plus précisément à la sortie de son module de conversion analogique/numérique CV1, et le module de conversion numérique/analogique CV2. Il peut également et éventuellement comprendre un second module de conversion de fréquence CF2.

On se réfère maintenant à la figure 7 pour décrire un premier exemple de réalisation d'un second dispositif (ou dispositif de desétalement) D2, selon l'invention, dédié au traitement des signaux analogiques issus d'un premier dispositif D1 selon l'invention. Chaque signal reçu dans une tranche temporelle, ci-après appelé signal (analogique) d'entrée, est donc représentatif de N répétitions (ou copies) d'une séquence d'échantillons numériques. N est le même facteur d'étalement que celui présenté ci-avant (N entier strictement supérieur à 1).

Dans cet exemple, le second dispositif D2 est implanté dans un démodulateur de porteuse(s) DR, ici de type DVB-RCS, et lui-même implanté dans un équipement de communication R. Dans ce cas, le second dispositif D2 est alimenté en signaux analogiques à traiter (desétaler) par son démodulateur de porteuse(s) DR. Mais, comme on le verra plus loin, le second dispositif D2 pourrait être externe au démodulateur de porteuse(s) DR tout en étant couplé à son entrée. Dans ce cas, la partie réception de l'équipement de communication R alimente en signaux analogiques à traiter (desétaler) l'entrée du second dispositif D2, et la sortie de ce dernier alimente l'entrée du démodulateur de porteuse(s) DR.

On considère ici que l'équipement de communication R est une passerelle de communication satellitaire (ou hub ou encore gateway). Mais, il pourrait s'agir de tout équipement de communication radio, fixe ou mobile (ou portable), capable d'échanger par voie d'ondes des données sous la forme de signaux avec un autre équipement, éventuellement via un ou plusieurs satellites de communication, comme par exemple un terminal d'émission/réception (éventuellement satellitaire), individuel ou collectif, une station terrestre de communication (éventuellement satellitaire), ou un ordinateur fixe ou portable, éventuellement de type satellitaire.

Selon l'invention, un second dispositif D2 comprend au moins un module de conversion analogique/numérique CV3, des moyens de mémorisation M2 et des moyens de combinaison CB.

Le module de conversion analogique/numérique CV3 est alimenté en signaux analogiques d'entrée représentatifs chacun de N répétitions (ou copies) d'une séquence d'échantillons numériques. Ces signaux analogiques d'entrée sont schématisés dans la partie inférieure de la figure 9A, dans le cas d'un spectre multiporteuse. Comme illustré, chaque tranche temporelle (ou timeslot) de durée TS contient N signaux d'entrée représentatifs de N copies (ou répétitions) d'un paquet initial (avant étalement), et chaque copie se présente sous la forme d'un burst de durée Tb' égale à Tb/N (t représente le temps).

La densité spectrale de puissance Di' en entrée du second dispositif D2 est illustrée dans la partie supérieure de la figure 9A en fonction de la fréquence f, dans le cas d'un spectre multiporteuse. Elle se présente sous la forme d'un signal occupant une bande passante BWi', définie par la relation BWi'=N*(1+α)*RS.

Le module de conversion analogique/numérique CV3 est chargé d'échantillonner les N signaux analogiques d'entrée (ou bursts) reçus dans chaque tranche temporelle en N séquences d'échantillons numériques (censées être identiques entre elles). Cet échantillonnage se fait selon une troisième fréquence d'échantillonnage Fe3, égale à N fois une quatrième fréquence d'échantillonnage Fe4, et de façon synchronisée par rapport au début de chaque tranche temporelle périodique (ou timeslot). Par conséquent, le module de conversion analogique/numérique CV3 délivre N séquences d'échantillons numériques, représentatives d'un même paquet, lors de chaque tranche temporelle.

Plusieurs solutions peuvent être envisagées pour que le second dispositif D2 puisse délivrer N séquences identiques d'échantillons numériques lors de chaque tranche temporelle. Ces solutions sont plus précisément destinées à permettre l'augmentation d'un facteur N du rythme symbole de travail du module de conversion analogique/numérique CV3 par rapport au rythme symbole de référence RS (non étalé).

Il est important de noter que l'horloge d'échantillonnage qui est utilisée par le module de conversion analogique/numérique CV3 doit être compatible avec la bande passante du signal étalé entrant.

Une première solution consiste à décimer les signaux numériques du facteur N. Pour ce faire, le module de conversion analogique/ numérique CV3 du second dispositif D2 peut, si le rapport Fe4/RS est supérieur à N (suréchantillonnage), diminuer d'un facteur N le nombre d'échantillons par symbole des N séquences identiques d'échantillons numériques (décimation), en travaillant avec la quatrième fréquence Fe4 (fournie par son horloge de référence).

Une seconde solution consiste à augmenter la quatrième fréquence Fe4 de l'horloge du module de conversion analogique/numérique CV3. A cet effet, et comme cela est illustré sur la figure 8, le second dispositif D2 peut comprendre un module de contrôle d'horloge MCH' chargé de transformer les signaux d'horloge de référence présentant la quatrième fréquence Fe4 du démodulateur DM en signaux d'horloge de travail présentant la troisième fréquence Fe3 égale à N fois la quatrième fréquence Fe4 (Fe3=N*Fe4). Ce module de contrôle d'horloge MCH' alimente alors le module de conversion analogique/numérique CV3 avec les signaux d'horloge de travail afin qu'il puisse travailler directement à la troisième fréquence Fe3.

Une troisième solution consiste à combiner les deux solutions précédentes en augmentant la fréquence d'horloge utilisée par le module de conversion analogique/numérique CV3 (Fe4 → Fe'4) par un facteur j2, au moyen du module de contrôle d'horloge MCH', et en décimant le signal numérique d'un facteur k2, avec j2*k2=N, dans le module de conversion analogique/numérique CV3, de sorte que la vitesse (ou fréquence) de modulation RC apparente soit égale à N*RS. Cela impose que l'on ait Fe'4=k2*Fe4 et Fe'4<RC. Avec ces définitions et conditions, la première solution correspond au cas où l'on a j2=1 (Fe'4=Fe4) et k2=N, tandis que la seconde solution correspond au cas où l'on a j2=N (Fe'4=N*Fe4=Fe3) et k2=1.

Les moyens de mémorisation M2 sont chargés de stocker temporairement au début de chaque tranche temporelle les N séquences identiques d'échantillons numériques qui sont délivrées par le module de conversion analogique/numérique CV3 lors de la tranche temporelle précédente. Pour ce faire, la taille des moyens de mémorisation M2 doit être au moins égale à N*Fe4*TS et la fréquence d'écriture des symboles d'une séquence dans les moyens de mémorisation M2 doit être égale à N*Fe4. Les moyens de mémorisation M2 se présentent par exemple sous la forme d'une mémoire tampon (ou « buffer »).

Les moyens de combinaison CB sont chargés de combiner en phase pendant chaque tranche temporelle les N séquences identiques d'échantillons numériques qui sont stockées dans les moyens de mémorisation M2, afin de délivrer en sortie une séquence d'échantillons numériques dite « combinée », selon le rythme symbole de référence RS.

Pour effectuer chaque combinaison en phase, les moyens de combinaison CB comprennent par exemple un module d'estimation MED, un module de compensation MCD et un module de sommation MS, comme cela est illustré sur la figure 7.

Le module d'estimation MED est chargé de lire une fois le contenu des moyens de mémorisation M2 afin de détecter les N séquences identiques et d'estimer leurs déphasages relatifs. La fréquence de lecture Fr est égale à la quatrième fréquence d'échantillonnage Fe4 (Fr=Fe4). Il est important de noter que la quatrième fréquence d'échantillonnage Fe4 peut être identique à, ou différente de, la première fréquence d'échantillonnage Fe1.

Le module de compensation MCD est chargé de compenser chaque déphasage qui est estimé par le module d'estimation MED afin de délivrer N séquences identiques compensées.

Le module de sommation MS est chargé de sommer (ou additionner) les N séquences identiques dont les déphasages ont été compensés par le module de compensation MCD afin de délivrer sur sa sortie une séquence d'échantillons numériques combinée.

Dans les premier et deuxième exemples de réalisation illustrés sur les figures 7 et 8, la sortie des moyens de combinaison CB constitue la sortie du second dispositif D2. Cette sortie fournit au module de conversion numérique/analogique CV4 du démodulateur DR, lors de chaque tranche temporelle, une séquence d'échantillons numériques combinée.

Le module de conversion numérique/analogique CV4 est chargé de générer, lors de chaque tranche temporelle, et selon la quatrième fréquence d'échantillonnage Fe4, un signal analogique de sortie représentatif de la séquence d'échantillons numériques combinée reçue.

Chaque signal analogique représente un paquet de données et peut être schématisé comme illustré dans la partie inférieure de la figure 9B, dans le cas d'un spectre multiporteuse. Comme illustré, chaque signal représentatif d'un paquet se présente sous la forme d'un burst de durée Tb situé dans une tranche temporelle (ou timeslot) de durée TS (t représente le temps).

La densité spectrale de puissance Do' en sortie du module de conversion numérique/analogique CV4 est illustrée dans la partie supérieure de la figure 9B en fonction de la fréquence f, dans le cas d'un spectre multiporteuse. Du fait de la combinaison, elle est égale à N fois Di' (Do' = N*Di'). Elle se présente sous la forme d'un signal occupant une bande passante BWo', définie par la relation BWo' = BWi'/N = (1+α)*RS.

Comme cela est illustré sur les figures 7 et 8, le second dispositif (ou dispositif de desétalement) D2 peut également comprendre un (premier) module de conversion de fréquence CF3 placé en amont de son module de conversion analogique/numérique CV3.

Le module de conversion de fréquence CF3 est chargé de convertir la fréquence primaire FI, que présente chaque signal analogique d'entrée reçu (devant être traité (ou desétalé)), en une fréquence secondaire, avant qu'il n'alimente le module de conversion analogique/numérique CV3. Cette fréquence secondaire est par exemple la fréquence en bande de base (ou baseband).

Dans ce cas, le démodulateur DR comprend, en aval de son module de conversion numérique/analogique CV4, un second module de conversion de fréquence CF4 chargé de convertir en fréquence primaire Fl la fréquence secondaire que présente chaque signal analogique de sortie délivré par le module de conversion numérique/analogique CV4, avant qu'il ne soit démodulé par le module de démodulation de porteuse MD du démodulateur DR.

Comme cela est illustré sur la figure 10, le second dispositif D2 peut faire partie d'un démodulateur DR et comporter en complément de ses module de conversion analogique/numérique CV3, moyens de mémorisation M2 et moyens de combinaison CB, le module de conversion numérique/analogique CV4, ainsi qu'éventuellement un second module de conversion de fréquence CF4.

Dans ce qui précède on a décrit un exemple de réalisation d'un second dispositif D2 faisant partie d'un démodulateur DR d'un récepteur R. Mais, plusieurs variantes de réalisation peuvent être envisagées.

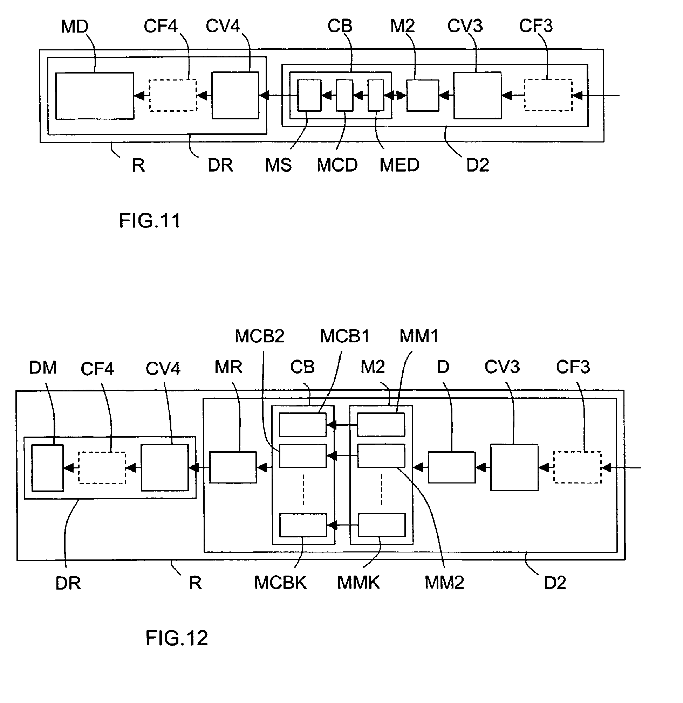

Ainsi, et comme illustré sur la figure 11, le second dispositif D2 peut être externe au démodulateur DR (qui comporte le module de conversion numérique/analogique CV4, le module de démodulation de porteuse MD, ainsi qu'éventuellement un second module de conversion de fréquence CF4). Il comporte alors le module de conversion analogique/numérique CV3, les moyens de mémorisation M2 et les moyens de combinaison CB, ainsi qu'éventuellement un premier module de conversion de fréquence CF3. La sortie des moyens de combinaison CB est alors couplée au démodulateur DR, et plus précisément à l'entrée de son module de conversion numérique/analogique CV4.

On se réfère maintenant à la figure 12 pour décrire un exemple de réalisation d'un second dispositif (ou dispositif de desétalement) D2, selon l'invention, variante des exemples décrits ci-avant en référence aux figures 7 à 11, et destiné à permettre le traitement par desétalement de signaux analogiques d'entrée présentant des porteuses Pi (i = 1 à K) différentes, associées à des nombres Ni de répétitions (ou copies) dont les valeurs diffèrent, au moins pour certaines d'entre elles.

Pour permettre ce type de traitement (par desétalement) de signaux de porteuses Pi différentes, le second exemple comprend, d'une première part, un module de conversion analogique/numérique CV3 (ainsi qu'éventuellement un module de conversion numérique/analogique CV4, un premier module de conversion de fréquence CF3 (comme illustré) et un second module de conversion de fréquence CF4) des types de ceux décrits précédemment en référence aux figures 7 à 11, d'une deuxième part, des moyens de mémorisation M2 agencés sous forme de modules de mémorisation MMi dédiés chacun au stockage des Ni séquences d'échantillons numériques associées aux porteuses Pi, des moyens de combinaison CB agencés sous forme de modules de combinaison MCBi dédiés chacun à la combinaison des Ni séquences d'échantillons numériques stockées dans le module de mémorisation MMi correspondant (associé à une porteuse Pi), et d'une troisième part, un module de démultiplexage DM et un module de multiplexage MR.

Le module de démultiplexage DM est intercalé entre le module de conversion analogique/numérique CV3 et les moyens de mémorisation modulaires M2 (MMi). Il est chargé de démultiplexer les Ni répétitions (ou copies) de séquences d'échantillons numériques, qui sont multiplexées et qui lui sont transmis par le module de conversion analogique/numérique CV3, en fonction de leurs porteuses Pi respectives. En d'autres termes, le module de démultiplexage DM délivre sur K sorties K ensembles de Ni séquences identiques d'échantillons numériques associés respectivement aux K porteuses Pi (P1 à PK).

Chaque sortie du module de démultiplexage DM est couplée à l'entrée de l'un des K modules de mémorisation MMi (MM1 à MMK) des moyens de mémorisation M2. Ainsi, chaque module de mémorisation MMi peut stocker pendant la durée d'une tranche temporelle Ni séquences identiques (démultiplexées) correspondant à la porteuse Pi à laquelle il est dédié.

Par ailleurs, chaque module de combinaison MCBi des moyens de combinaison CB est couplé au module de mémorisation MMi qui correspond à la porteuse Pi à laquelle il est dédié. Chaque module de combinaison MCBi comprend une structure du type de celle décrite précédemment. Il comprend par conséquent, préférentiellement, un module d'estimation MEDi, un module de compensation MCDi et un module de sommation MSi, bien que cela ne soit pas matérialisé sur la figure 12. Ainsi, chaque module de combinaison MCBi peut combiner en phase (selon la méthode décrite précédemment), pendant chaque tranche temporelle, les Ni séquences identiques d'échantillons numériques qui sont stockées dans le module de mémorisation MMi auquel il est couplé, afin de délivrer en sortie une séquence d'échantillons numériques combinée. Cette combinaison se fait par estimation des déphasages relatifs entre les Ni séquences identiques d'échantillons numériques stockées dans le module de mémorisation MMi concerné, puis compensation de chaque déphasage estimé de manière à délivrer Ni séquences identiques compensées, et enfin sommation (ou addition) des Ni séquences identiques à déphasages compensés afin de délivrer une séquence d'échantillons numériques combinée.

Le module de multiplexage MR est placé en sortie des moyens de combinaison CB et en amont du module de conversion numérique/analogique CV4 du démodulateur DR. Il est chargé de multiplexer les séquences d'échantillons numériques combinées, délivrées par les sorties des K modules de combinaison MCBi (MCB1 à MCBK) et correspondant aux différentes porteuses Pi (P1 à PK), afin d'alimenter en multiplex de séquences d'échantillons numériques combinées le module de conversion numérique/analogique CV4. En d'autres termes, le module de multiplexage MR délivre sur une sortie un multiplex constitué à partir des séquences reçues sur ses K entrées.

Le module de conversion numérique/analogique CV4 du démodulateur DR convertit ensuite les multiplex en signaux analogiques de sortie, qui sont destinés à alimenter la partie MD de son démodulateur DR dédiée à la démodulation, après une éventuelle conversion de fréquence au moyen du second convertisseur de fréquence CF4.

Dans l'exemple illustré sur la figure 12, le second dispositif (ou dispositif de desétalement) D2 est externe au démodulateur DR, tout en étant couplé à ce dernier. Mais, dans une variante, il pourrait faire partie du démodulateur DR (comme c'est le cas dans les exemples illustrés sur les figures 7 et 10).

Les premier D1 et second D2 dispositifs de traitement de signaux selon l'invention, et notamment leurs modules de conversion analogique/numérique et numérique/analogique, leurs moyens de combinaison, leurs moyens de mémorisation, leurs éventuels modules de multiplexage et de démultiplexage, et leurs éventuels premier et second modules de conversion de fréquence, peuvent être réalisés sous la forme de circuits électroniques ou d'une combinaison de circuits et de modules logiciels (ou informatiques).

L'invention ne se limite pas aux modes de réalisation de premier et second dispositifs de traitement de signaux, de terminal de communication et de démodulateur décrits ci-avant, seulement à titre d'exemple, mais elle englobe toutes les variantes que pourra envisager l'homme de l'art dans le cadre des revendications ci-après.

## Revendications

1. Dispositif (D1) de traitement de signaux à transmettre par voie d'ondes, **caractérisé en ce qu'**il comprend i) des moyens de mémorisation (M1) propres à stocker temporairement une séquence d'échantillons numériques d'un signal analogique d'entrée selon une première fréquence d'échantillonnage et de façon synchronisée par rapport à des débuts de tranches temporelles périodiques, et ii) des moyens de conversion numérique/ analogique (CV2) agencés pour générer, pendant chaque tranche temporelle et selon une seconde fréquence d'échantillonnage égale à N fois ladite première fréquence d'échantillonnage, avec N entier strictement supérieur à 1, un signal analogique de sortie, à transmettre, représentatif de N répétitions de la séquence d'échantillons numériques stockée dans lesdits moyens de mémorisation (M1) pendant ladite tranche temporelle concernée, de manière à délivrer sur une sortie ledit signal analogique selon un rythme symbole égal à N fois un rythme symbole de référence.

2. Dispositif selon la revendication 1, **caractérisé en ce qu'**il comprend des moyens de contrôle d'horloge (MCH) agencés pour transformer des signaux d'horloge de référence présentant ladite première fréquence en signaux d'horloge de travail présentant ladite seconde fréquence, et pour alimenter lesdits moyens de conversion numérique/analogique (CV2) avec lesdits signaux de travail de sorte qu'ils puissent travailler à ladite seconde fréquence.

3. Dispositif selon la revendication 1, **caractérisé en ce qu'**en présence d'un rapport entre ladite première fréquence et ledit rythme symbole de référence supérieur à N, lesdits moyens de conversion numérique/analogique (CV2) sont agencés pour diminuer d'un facteur N le nombre d'échantillons par symbole de ladite séquence d'échantillons numériques répétée N fois, tout en travaillant selon ladite première fréquence.

4. Dispositif selon la revendication 1, **caractérisé en ce qu'**il comprend des moyens de contrôle d'horloge (MCH) agencés pour transformer des signaux d'horloge de référence présentant ladite première fréquence en signaux d'horloge de travail présentant une fréquence intermédiaire égale à J1 fois ladite première fréquence et inférieure à ladite seconde fréquence, et pour alimenter lesdits moyens de conversion numérique/ analogique (CV2) avec lesdits signaux de travail de sorte qu'ils puissent travailler à ladite fréquence intermédiaire, et **en ce que** lesdits moyens de conversion numérique/analogique (CV2) sont agencés pour diminuer d'un facteur K1 le nombre d'échantillons par symbole de ladite séquence d'échantillons numériques répétée N fois, avec J1*K1=N, tout en travaillant selon ladite fréquence intermédiaire.

5. Dispositif selon l'une des revendications 1 à 4, **caractérisé en ce qu'**il comprend des moyens de conversion analogique/numérique (CV1) agencés pour échantillonner chaque signal analogique d'entrée à transmettre en une séquence d'échantillons numériques selon ladite première fréquence d'échantillonnage et de façon synchronisée par rapport aux débuts de tranches temporelles périodiques, de manière à alimenter en séquence d'échantillons lesdits moyens de mémorisation (M1).

6. Dispositif selon la revendication 5, **caractérisé en ce qu'**il comprend des premiers moyens de conversion de fréquence (CF1) agencés pour convertir une fréquence primaire que présente ledit signal analogique d'entrée en une fréquence secondaire, avant qu'il n'alimente lesdits moyens de conversion analogique/numérique (CV1), et des seconds moyens de conversion de fréquence (CF2) agencés pour convertir la fréquence secondaire que présente ledit signal analogique de sortie en ladite fréquence primaire.

7. Dispositif selon la revendication 6, **caractérisé en ce que** ladite fréquence secondaire est dite en bande de base.

8. Terminal de communication par voie d'ondes (T), **caractérisé en ce qu'**il comprend un dispositif de traitement de signaux (D1) selon l'une des revendications précédentes.

9. Dispositif (D2) de traitement de signaux analogiques issus d'un dispositif de traitement de signaux (D1) selon l'une des revendications 1 à 7, **caractérisé en ce qu'**il comprend i) des moyens de conversion analogique/ numérique (CV3) agencés pour échantillonner un signal analogique d'entrée, représentatif de N répétitions de séquences d'échantillons numériques, avec N entier strictement supérieur à 1, en N séquences identiques d'échantillons numériques, selon une troisième fréquence d'échantillonnage, égale à N fois une quatrième fréquence d'échantillonnage, et de façon synchronisée par rapport à des débuts de tranches temporelles périodiques, ii) des moyens de mémorisation (M2) propres à stocker temporairement les N séquences identiques d'échantillons numériques délivrées par lesdits moyens de conversion analogique/numérique (CV3) pendant chaque tranche temporelle, et iii) des moyens de combinaison (CB) agencés pour combiner en phase pendant chaque tranche temporelle les N séquences identiques d'échantillons numériques stockées dans lesdits moyens de mémorisation (M2) de manière à délivrer une séquence d'échantillons numériques combinée selon un rythme symbole de référence.

10. Dispositif selon la revendication 9, **caractérisé en ce que** lesdits moyens de combinaison (CB) comprennent des moyens d'estimation (MED) agencés pour estimer les déphasages relatifs entre les N séquences identiques d'échantillons numériques, des moyens de compensation (MCD) agencés pour compenser lesdits déphasages estimés de manière à délivrer N séquences identiques compensées, et des moyens de sommation (MS) agencés pour sommer lesdites N séquences identiques compensées de manière à délivrer ladite séquence d'échantillons numériques combinée.

11. Dispositif selon l'une des revendications 9 et 10, **caractérisé en ce qu'**il comprend des moyens de contrôle d'horloge (MCH') agencés pour transformer des signaux d'horloge de référence présentant ladite quatrième fréquence en signaux d'horloge de travail présentant ladite troisième fréquence, et pour alimenter lesdits moyens de conversion analogique/ numérique (CV3) avec lesdits signaux de travail de sorte qu'ils puissent travailler à ladite quatrième fréquence.

12. Dispositif selon l'une des revendications 9 et 10, **caractérisé en ce qu'**en présence d'un rapport entre ladite quatrième fréquence et ledit rythme symbole de référence supérieur à N, lesdits moyens de conversion analogique/numérique (CV3) sont agencés pour diminuer d'un facteur N le nombre d'échantillons par symbole desdites N séquences identiques d'échantillons numériques, tout en travaillant selon ladite quatrième fréquence.

13. Dispositif selon l'une des revendications 9 et 10, **caractérisé en ce qu'**il comprend des moyens de contrôle d'horloge (MCH') agencés pour transformer des signaux d'horloge de référence présentant ladite quatrième fréquence en signaux d'horloge de travail présentant une fréquence intermédiaire égale à J2 fois ladite quatrième fréquence et inférieure à ladite troisième fréquence, et pour alimenter lesdits moyens de conversion analogique/numérique (CV3) avec lesdits signaux de travail de sorte qu'ils puissent travailler à ladite fréquence intermédiaire, et **en ce que** lesdits moyens de conversion analogique/numérique (CV3) sont agencés pour diminuer d'un facteur K2 le nombre d'échantillons par symbole desdites N séquences identiques d'échantillons numériques, avec J2*K2=N, tout en travaillant selon ladite fréquence intermédiaire.

14. Dispositif selon l'une des revendications 9 à 13, **caractérisé en ce qu'**il comprend des moyens de conversion numérique/analogique (CV4) agencés pour générer, pendant chaque tranche temporelle et selon ladite quatrième fréquence d'échantillonnage, un signal analogique de sortie représentatif de ladite séquence d'échantillons numériques combinée.

15. Dispositif selon la revendication 14, **caractérisé en ce qu'**il comprend des premiers moyens de conversion de fréquence (CF3) agencés pour convertir une fréquence primaire que présente ledit signal analogique d'entrée en une fréquence secondaire, avant qu'il n'alimente lesdits moyens de conversion analogique/numérique (CV3), et des seconds moyens de conversion de fréquence (CF4) agencés pour convertir la fréquence secondaire que présente ledit signal analogique de sortie en ladite fréquence primaire.

16. Dispositif selon la revendication 15, **caractérisé en ce que** ladite fréquence secondaire est dite en bande de base.

17. Dispositif selon l'une des revendications 9 à 16, **caractérisé en ce qu'**il comprend des moyens de démultiplexage (DM) intercalés entre lesdits moyens de conversion analogique/numérique (CV3) et lesdits moyens de mémorisation (M2) et agencés, en présence de signaux d'entrée présentant des porteuses différentes (Pi) associées à des nombres (Ni) de répétitions de valeurs différentes, pour démultiplexer les répétitions de séquences en fonction des porteuses associées, **en ce que** lesdits moyens de mémorisation (M2) sont constitués de modules de mémorisation (MMi) associés chacun à l'une desdites porteuses (Pi) et propres a stocker les répétitions de séquences démultiplexées qui leur correspondent respectivement, **en ce que** lesdits moyens de combinaison (CB) sont constitués de modules de combinaison (MCBi) associés chacun à l'une desdites porteuses (Pi) et propres chacun à combiner en phase pendant chaque tranche temporelle les répétitions de séquences identiques d'échantillons numériques stockées dans le module de mémorisation correspondant (MMi) de manière à délivrer une, séquence d'échantillons numériques combinée selon ledit rythme symbole de référence, et **en ce qu'**il comprend des moyens de multiplexage (MR) placés en aval desdits modules de combinaison (MCBi) et agencés pour multiplexer les séquences d'échantillons numériques combinées, délivrées par lesdits modules de combinaison (MCBi), afin de délivrer des multiplex de séquences,

18. Démodulateur (DR) de signaux transmis par voie d'ondes, **caractérisé en ce qu'**il comprend un dispositif de traitement de signaux (D2) selon l'une des revendications 9 à 17.

## Claims

1. Device (D1) for processing signals to be transmitted by radio, **characterised in that** it comprises i) storage means (M1) adapted to store temporarily a sequence of digital samples of an analog input signal at a first sampling frequency and synchronously with the beginnings of periodic time slots, and ii) digital/analog conversion means (CV2) adapted to generate, during each time slot and at a second sampling frequency equal to N times said first sampling frequency, where N is an integer strictly greater than 1, an analog output signal, to be transmitted, representing N repetitions of the sequence of digital samples stored in said storage means (M1) during said time slot concerned, so as to deliver said analog signal at an output at a symbol rate equal to N times a reference symbol rate.

2. Device according to claim 1, **characterised in that** it comprises clock control means (MCH) adapted to convert reference clock signals at said first frequency into working clock signals at said second frequency and for feeding said digital/analog conversion means (CV2) with said working signals so that they can operate at said second frequency.

3. Device according to claim 1, **characterised in that** in the presence of a ratio between said first frequency and said reference symbol rate greater than N, said digital/analog conversion means (CV2) are adapted to reduce by a factor N the number of samples per symbol of said sequence of digital symbols repeated N times, whilst operating at said first frequency.

4. Device according to claim 1, **characterised in that** it comprises clock control means (MCH) adapted to convert reference clock signals at said first frequency into working clock signals at an intermediate frequency equal to J1 times said first frequency and less than said second frequency, and for feeding said digital/analog conversion means (CV2) with said working signals so that they can operate at said intermediate frequency, and **in that** said digital/analog conversion means (CV2) are adapted to reduce by a factor K1 the number of symbols per symbol of said sequence of digital samples repeated N times, where J1*K1=N, whilst operating at said intermediate frequency.

5. Device according to any one of claims 1 to 4, **characterised in that** it comprises an analog/digital conversion means (CV1) adapted to sample each analog input signal to be transmitted to produce a sequence of digital samples at said first sampling frequency and synchronously with the beginnings of periodic time slots so as to feed sequences of samples to said storage means (M1).

6. Device according to claim 5, **characterised in that** it comprises first frequency conversion means (CF1) adapted to convert a primary frequency of said analog input signal into a secondary frequency before it feeds said analog/digital conversion means (CV1) and second frequency conversion means (CF2) adapted to convert the secondary frequency of said analog output signal into said primary frequency.

7. Device according to claim 6, **characterised in that** said secondary frequency is a baseband frequency.

8. Radio communication terminal (T), **characterised in that** it comprises a signal processing device (D1) according to any one of the preceding claims.

9. Device (D2) for processing analog signals coming from a signal processing device (D1) according to any one of claims 1 to 7, **characterised in that** it comprises i) analog/digital conversion means (CV3) adapted to sample an analog input signal representing N repetitions of sequences of digital samples, where N is an integer strictly greater than 1, to produce N identical sequences of digital samples at a third sampling frequency equal to N times a fourth sampling frequency and synchronously with beginnings of periodic time slots, ii) storage means (M2) adapted to store temporarily the N identical sequences of digital samples delivered by said analog/digital conversion means (CV3) during each time slot, and iii) combination means (CB) adapted to combine in phase during each time slot the N identical sequences of digital samples stored in said storage means (M2) so as to deliver a sequence of digital samples combined at a reference symbol rate.

10. Device according to claim 9, **characterised in that** said combination means (CB) comprise estimation means (MED) adapted to estimate the relative phase differences between the N identical sequences of digital samples, compensation means (MCD) adapted to compensate said estimated phase differences so as to deliver N identical compensated sequences, and summation means (MS) adapted to sum said N identical sequences compensated so as to deliver said combined sequence of digital samples.

11. Device according to either of claims 9 or 10, **characterised in that** it comprises clock control means (MCH') adapted to convert reference clock signals at said fourth frequency into working clock signals at said third frequency and for feeding said analog/digital conversion means (CV3) with said working signals so that they can operate at said fourth frequency.

12. Device according to either of claims 9 or 10, **characterised in that** in the presence of a ratio between said fourth frequency and said reference symbol rate greater than N, said analog/digital conversion means (CV3) are adapted to reduce by a factor N the number of samples per symbol of said N identical sequences of digital samples, whilst operating at said fourth frequency.

13. Device according to either of claims 9 or 10, **characterised in that** it comprises clock control means (MCH') adapted to convert reference clock signals at said fourth frequency into working clock signals at an intermediate frequency equal to J2 times said fourth frequency and lower than said third frequency and for feeding said analog/digital conversion means (CV3) with said working signals so that they can operate at said intermediate frequency, and **in that** said analog/digital conversion means (CV3) are adapted to reduce by a factor K2 the number of samples per symbol of said N identical sequences of digital samples, where J2*K2=N, whilst operating at said intermediate frequency.

14. Device according to any one of claims 9 to 13, **characterised in that** it comprises digital/analog conversion means (CV4) adapted to generate, during each time slot and at said fourth sampling frequency, an analog output signal representing said combined sequence of digital samples.

15. Device according to claim 14, **characterised in that** it comprises first frequency conversion means (CF3) adapted to convert a primary frequency of said analog input signal into a secondary frequency before it feeds said analog/digital conversion means (CV3) and second frequency conversion means (CF4) adapted to convert the secondary frequency of said analog output signal to said primary frequency.

16. Device according to claim 15, **characterised in that** said secondary frequency is baseband.

17. Device according to any one of claims 9 to 16, **characterised in that** it comprises demultiplexing means (DM) interleaved between said analog/digital conversion means (CV3) and said storage means (M2) and adapted, in the presence of input signals on different carriers (Pi) associated with different numbers (Ni) of repetitions of values, for demultiplexing the repetitions of sequences as a function of the associated carriers, **in that** said storage means (M2) consist of storage modules (MMi) each associated with one of said carriers (Pi) and adapted to store the demultiplexed sequence repetitions that respectively correspond to them, **in that** said combination means (CB) consist of combination modules (MCBi) each associated with one of said carriers (Pi) and each adapted to combine in phase during each time slot the repetitions of identical sequences of digital samples stored in the corresponding storage module (MMi) so as to deliver a combined sequence of digital samples at said reference symbol rate, and **in that** it comprises multiplexing means (MR) downstream of said combination modules (MCBi) and adapted to multiplex the combined sequences of digital samples delivered by said combination modules (MCBi) so as to deliver multiplexes of sequences.

18. Demodulator (DR) of signals transmitted by radio, **characterised in that** it comprises a signal processing device (D2) according to any one of claims 9 to 17.

## Patentansprüche

1. Vorrichtung (D1) zur Verarbeitung von über Wellen zu übertragenden Signalen, **dadurch gekennzeichnet, dass** sie umfasst: i) Speichermittel (M1) zum vorübergehenden Speichern einer Abfolge von digitalen Abtastwerten eines analogen Eingangssignals entsprechend einer ersten Abtastfrequenz und synchron mit den periodischen Zeitschlitzanfängen, und ii) Mittel zur Digital-Analog-Umsetzung (CV2), welche ausgestaltet sind, um während eines jeden Zeitschlitzes und gemäß einer zweiten Abtastfrequenz, welche gleich N-mal die besagte erste Abtastfrequenz ist, wobei N ganzzahlig strikt höher als 1 ist, ein zu übertragendes analoges Ausgangssignal zu erzeugen, welches für N Wiederholungen der Abfolge von in den besagten Speichermitteln (M1) während des besagten betroffenen Zeitschlitzes repräsentativ ist, um das besagte analoge Signal gemäß einem Symbolrhythmus, welcher gleich N-mal ein Referenz-Symbolrhythmus ist, an einem Ausgang zu liefern.

2. Vorrichtung nach Anspruch 1, **dadurch gekennzeichnet, dass** sie Mittel zur Steuerung des Taktgebers (MCH) umfasst, die ausgestaltet sind, um Referenztaktsignale, welche die besagte erste Frequenz aufweisen, in Arbeitstaktsignale, welche die besagte zweite Frequenz aufweisen, umzuwandeln, und um die besagten Mittel zur Digital-Analog-Umsetzung (CV2) mit den besagten Arbeitssignalen zu versorgen, so dass diese mit der besagten zweiten Frequenz arbeiten können.

3. Vorrichtung nach Anspruch 1, **dadurch gekennzeichnet, dass**, wenn ein Verhältnis zwischen der besagten ersten Frequenz und dem besagten Referenzsymbolrhythmus festgestellt wird, welches höher als N ist, die besagten Mittel zur Digital-Analog-Umsetzung (CV2) ausgestaltet sind, um die Anzahl der Abtastwerte pro Symbol der besagten N-mal wiederholten Abfolge von digitalen Abtastwerten um einen Faktor N zu reduzieren, wobei gemäß der besagten ersten Frequenz gearbeitet wird.

4. Vorrichtung nach Anspruch 1, **dadurch gekennzeichnet, dass** sie Mittel zur Steuerung des Taktgebers (MCH) umfasst, welche ausgestaltet sind, um Referenztaktsignale, welche die besagte erste Frequenz aufweisen, in Arbeitstaktsignale, welche eine Zwischenfrequenz, die gleich J1-mal die besagte erste Frequenz und niedriger als die besagte zweite Frequenz ist, aufweisen, umzuwandeln, und um die besagten Mittel zur Digital-Analog-Umsetzung (CV2) mit den besagten Arbeitssignalen zu versorgen, so dass diese mit der besagten Zwischenfrequenz arbeiten können, und **dadurch**, dass die besagten Mittel zur Digital-Analog-Umsetzung (CV2) ausgestaltet sind, um die Anzahl der Abtastwerte pro Symbol der besagten N-mal wiederholten Abfolge von digitalen Abtastwerten um einen Faktor K1 zu verringern, wobei J1*K1=N, wobei gemäß der besagten Zwischenfrequenz gearbeitet wird.

5. Vorrichtung nach einem der Ansprüche 1 bis 4, **dadurch gekennzeichnet, dass** die Mittel zur Analog-Digital-Umsetzung (CV1) umfassen, welche ausgestaltet sind, um jedes zu übertragende digitale Eingangssignal in eine Abfolge von digitalen Abtastwerten entsprechend der besagten ersten Abtastfrequenz und synchron mit den periodischen Zeitschlitzanfängen abzutasten, so dass die besagten Speichermittel (M1) mit einer Abfolge von Abtastwerten versorgt werden.

6. Vorrichtung nach Anspruch 5, **dadurch gekennzeichnet, dass** sie erste Mittel zur Frequenzumsetzung (CF1), welche ausgestaltet sind, um eine primäre Frequenz, welche das besagte analoge Eingangssignal aufweist, in eine sekundäre Frequenz umzuwandeln, bevor es die besagten Mittel zur Analog-Digital-Umsetzung (CV1) versorgt, sowie zweite Mittel zur Frequenzumsetzung (CF2), welche ausgestaltet sind, um die sekundäre Frequenz, welche das besagte analoge Ausgangssignal aufweist, in die besagte primäre Frequenz umzuwandeln, umfasst.

7. Vorrichtung nach Anspruch 6, **dadurch gekennzeichnet, dass** die besagte sekundäre Frequenz als Basisbandfrequenz bezeichnet wird.

8. Endgerät zur Kommunikation mittels Wellen (T), **dadurch gekennzeichnet, dass** es eine Vorrichtung zur Verarbeitung von Signalen (D1) gemäß einem der vorstehenden Ansprüche umfasst.

9. Vorrichtung (D2) zur Verarbeitung von analogen Signalen, welche von einer Vorrichtung zur Verarbeitung von Signalen (D1) gemäß einem der Ansprüche 1 bis 7 stammen, **dadurch gekennzeichnet, dass** sie umfasst: i) Mittel zur Analog-Digital-Umsetzung (CV3), welche ausgestaltet sind, um ein analoges Eingangssignal, welches für N Wiederholungen von Abfolgen von digitalen Abtastwerten repräsentativ ist, wobei N ganzzahlig strikt höher als 1 ist, in N identische Abfolgen von digitalen Abtastwerten gemäß einer dritten Abtastfrequenz, welche gleich N-mal eine vierte Abtastfrequenz ist, und synchron mit den periodischen Zeitschlitzanfängen abzutasten, ii) Speichermittel (M2) zum vorübergehenden Speichern der N identischen Abfolgen von digitalen Abtastwerten, welche von den besagten Mitteln zur Analog-Digital-Umsetzung (CV3) während eines jeden Zeitschlitzes geliefert werden, und iii) Kombinationsmittel (CB), welche ausgestaltet sind, um die in den besagten Speichermitteln (M2) gespeicherten N identischen Abfolgen von digitalen Abtastwerten phasengerecht zu kombinieren, so dass eine gemäß einem Referenzsymbolrhythmus kombinierte Abfolge von digitalen Abtastwerten geliefert wird.

10. Vorrichtung nach Anspruch 9, **dadurch gekennzeichnet, dass** die besagten Kombinationsmittel (CB) Abschätzungsmittel (MED), welche ausgestaltet sind, um die relativen Phasenverschiebungen zwischen den N identischen Abfolgen von digitalen Abtastwerten abzuschätzen, Kompensationsmittel (MCD), welche ausgestaltet sind, um die besagten geschätzten Phasenverschiebungen zu kompensieren, so dass N identische kompensierte Abfolgen geliefert werden, sowie Summierungsmittel (MS), welche ausgestaltet sind, um die besagten N identischen kompensierten Abfolgen zu summieren, so dass die besagte kombinierte Abfolge von digitalen Abtastwerten geliefert wird, umfassen.

11. Vorrichtung nach einem der Ansprüche 9 und 10, **dadurch gekennzeichnet, dass** sie Mittel zur Steuerung des Taktgebers (MCH') umfasst, die ausgestaltet sind, um Referenztaktsignale, welche die besagte vierte Frequenz aufweisen, in Arbeitstaktsignale, welche die besagte dritte Frequenz aufweisen, umzuwandeln, und um die besagten Mittel zur Analog-Digital-Umsetzung (CV3) mit den besagten Arbeitssignalen zu versorgen, so dass diese mit der besagten vierten Frequenz arbeiten können.

12. Vorrichtung nach einem der Ansprüche 9 und 10, **dadurch gekennzeichnet, dass**, wenn ein Verhältnis zwischen der besagten vierten Frequenz und dem besagten Referenzsymbolrhythmus festgestellt wird, welches höher als N ist, die besagten Mittel zur Analog-Digital-Umsetzung (CV3) ausgestaltet sind, um die Anzahl der Abtastwerte pro Symbol der besagten N identischen Abfolgen von digitalen Abtastwerten um einen Faktor N zu reduzieren, wobei gemäß der besagten vierten Frequenz gearbeitet wird.

13. Vorrichtung nach einem der Ansprüche 9 und 10, **dadurch gekennzeichnet, dass** sie Mittel zur Steuerung des Taktgebers (MCH') umfasst, welche ausgestaltet sind, um Referenztaktsignale, welche die besagte vierte Frequenz aufweisen, in Arbeitstaktsignale, welche eine Zwischenfrequenz, die gleich J2-mal die besagte vierte Frequenz und niedriger als die besagte dritte Frequenz ist, aufweisen, umzuwandeln, und um die besagten Mittel zur Analog-Digital-Umsetzung (CV3) mit den besagten Arbeitssignalen zu versorgen, so dass diese mit der besagten Zwischenfrequenz arbeiten können, und **dadurch**, dass die besagten Mittel zur Analog-Digital-Umsetzung (CV3) ausgestaltet sind, um die Anzahl der Abtastwerte pro Symbol der besagten N identischen Abfolgen von digitalen Abtastwerten um einen Faktor K2 zu verringern, wobei J2*K2=N, wobei gemäß der besagten Zwischenfrequenz gearbeitet wird.

14. Vorrichtung nach einem der Ansprüche 9 bis 13, **dadurch gekennzeichnet, dass** sie Mittel zur Digital-Analog-Umsetzung (CV4) umfasst, welche ausgestaltet sind, um während eines jeden Zeitschlitzes und gemäß der besagten vierten Abtastfrequenz ein analoges Ausgangssignal zu erzeugen, welches für die besagte kombinierte Abfolge von digitalen Abtastwerten repräsentativ ist.

15. Vorrichtung nach Anspruch 14, **dadurch gekennzeichnet, dass** sie erste Mittel zur Frequenzumsetzung (CF3), welche ausgestaltet sind, um eine primäre Frequenz, welche das besagte analoge Eingangssignal aufweist, in eine sekundäre Frequenz umzuwandeln, bevor es die besagten Mittel zur Analog-Digital-Umsetzung (CV3) versorgt, sowie zweite Mittel zur Frequenzumsetzung (CF4), welche ausgestaltet sind, um die sekundäre Frequenz, welche das besagte analoge Ausgangssignal aufweist wird, in die besagte primäre Frequenz umzuwandeln, umfasst.

16. Vorrichtung nach Anspruch 15, **dadurch gekennzeichnet, dass** die besagte sekundäre Frequenz als Basisbandfrequenz bezeichnet wird.

17. Vorrichtung nach einem der Ansprüche 9 bis 16, **dadurch gekennzeichnet, dass** sie Demultiplexiermittel (DM) umfasst, welche zwischen den besagten Mitteln zur Analog-Digital-Umsetzung (CV3) und den besagten Speichermitteln (M2) zwischengeschaltet und ausgestaltet sind, um bei Vorhandensein von Eingangssignalen, welche verschiedene, mit Anzahlen (Ni) von Wiederholungen mit verschiedenen Werten assoziierte Träger (Pi) aufweisen, die Wiederholungen von Folgen entsprechend den assoziierten Trägern zu demultiplexen, dass die besagten Speichermittel (M2) aus Speichermodulen (MMi) bestehen, welche jeweils mit einem der besagten Träger (Pi) assoziiert und fähig sind, die Wiederholungen von demultiplexten Folgen, welche ihnen jeweils entsprechen, zu speichern, dass die besagten Kombinationsmittel (CB) aus Kombinationsmodulen (MCBi) bestehen, welche jeweils mit einem der besagten Träger (Pi) assoziiert und jeweils fähig sind, während eines jeden Zeitschlitzes die Wiederholungen von identischen Abfolgen von digitalen Abtastwerten, welche in dem entsprechenden Speichermodul (MMi) gespeichert sind, phasengleich zu kombinieren, so dass eine kombinierte Abfolge von digitalen Abtastwerten gemäß dem besagten Referenzsymbolrhythmus geliefert wird, und dass sie Multiplexiermittel (MR) umfasst, welche den besagten Kombinationsmodulen (MCBi) nachgeschaltet und ausgestaltet sind, um die von den besagten Kombinationsmodulen (MCBi) gelieferten kombinierten Abfolgen von digitalen Abtastwerten zu multiplexen, so dass Sequenzmultiplexe geliefert werden.

18. Demodulator (DR) für über Wellen übertragene Signale, **dadurch gekennzeichnet, dass** er eine Vorrichtung zur Verarbeitung von Signalen (D2) nach einem der Ansprüche 9 bis 17 umfasst.
